# EUROPÄISCHE PATENTANMELDUNG

(11) **EP 4 748 657 A1**
(43) Veröffentlichungstag der Anmeldung: **27.05.2026**
(21) Anmeldenummer: 25215669.0
(22) Anmeldetag: 13.11.2025
(51) Int. Cl.: B60R 25/24, B60R 25/30, B60R 25/40, B60R 16/023, G07C 9/00, G08C 17/02

(54) **VERFAHREN EINES FAHRZEUGS ZUR STEUERUNG DER SENDELEISTUNG BEI DER KOMMUNIKATION MIT EINEM FAHRZEUGSCHLÜSSEL SOWIE FAHRZEUG UND FAHRZEUGSCHLÜSSEL**

(30) Priorität: 22.11.2024 DE 102024134422
(71) Anmelder: Volkswagen Aktiengesellschaft, 38440 Wolfsburg (DE)
(72) Erfinder: Grünewald, Marek, 38440 Wolfsburg (DE)

(57) **Zusammenfassung**

Die Erfindung betrifft ein Verfahren eines Fahrzeugs (1) mit einer Steuereinheit (10); und einem Kommunikationssystem (20) mit einem Kommunikationssteuergerät (21) und einem Sendeempfänger (22). Der Sendeempfänger (22) ist zur Ultra-High-Frequency, UHF, Kommunikation mit einem Fahrzeugschlüssel (2) ausgebildet. Weiterhin betrifft die Erfindung ein Fahrzeug (1), das zur Durchführung dieses Verfahrens ausgebildet ist, einen Fahrzeugschlüssel (2) und ein System aus einem solchen Fahrzeug (1) und einem solchen Fahrzeugschlüssel (2). Es ist vorgesehen, dass das Verfahren ein Übermitteln (101) einer ersten Nachricht (111) durch die Steuereinheit (10) an das Kommunikationssteuergerät (20) und ein Einstellen (102) einer UHF Sendeleistung des Sendeempfängers (22) basierend auf der ersten Nachricht (111) durch das Kommunikationssteuergerät (21) aufweist. Weitere Verfahrensschritte umfassen ein Senden (103) einer zweiten Nachricht (112) durch die Steuereinheit (10) an das Kommunikationssteuergerät (21), ein Ansteuern (104) des Sendeempfängers (22) durch das Kommunikationssteuergerät (21), um ein auf der zweiten Nachricht (112) basierendes Datenpaket (114) mit der eingestellten UHF Sendeleistung an den Fahrzeugschlüssel (2) zu senden, wobei, wenn die zweite Nachricht (112) Daten mit Bezug zu einer Serviceleistung für das Fahrzeug (1) aufweist, das Kommunikationssteuergerät die UHF Sendeleistung als eine erste vorbestimmte UHF Sendeleistung einstellt.

## Beschreibung

Die Erfindung betrifft ein Verfahren eines Fahrzeugs zur Steuerung der Sendeleistung bei der Kommunikation mit einem Fahrzeugschlüssel. Ferner betrifft die Erfindung ein Fahrzeug, das dazu ausbildet ist, ein solches Verfahren durchzuführen, einen Fahrzeugschlüssel und ein System aus einem solchen Fahrzeug und einem solchen Fahrzeugschlüssel.

In der heutigen Zeit sind elektronische Fahrzeugschlüssel und die Verwendung von Smartphones als Fahrzeugschlüssel weit verbreitet und bieten eine Vielzahl von Funktionen. Beispielsweise ermöglichen sie einen kontaktlosen Zugang zum Fahrzeug oder Daten zu speichern, die für eine Reparatur des Fahrzeugs relevant sind und in Werkstätten ausgelesen werden können.

Bei der Kommunikation von Fahrzeug und Fahrzeugschlüssel ist eine Regelung der Sendeleistung entscheidend, um die Energieeffizienz der Fahrzeugschlüssel zu optimieren und die Batterielebensdauer zu verlängern, was sowohl die Benutzerfreundlichkeit als auch die Nachhaltigkeit der Technologie verbessert. Darüber hinaus gewährleistet eine angepasste Sendeleistung die Einhaltung gesetzlicher Vorgaben und minimiert potenzielle Interferenzen mit anderen elektronischen Geräten, was zu einer sicheren und zuverlässigen Kommunikation zwischen Schlüssel und Fahrzeug beiträgt.

Gängige Verfahren konzentrieren sich darauf, die Sendeleistung von Fahrzeugschlüsseln zu regeln, um deren Energieeffizienz zu maximieren. Beispielsweise beschreibt das Dokument US 2009 / 0 243 796 A1 eine Methode bei der die Sendeleistung des Fahrzeugschlüssels an den Abstand zum Fahrzeug angepasst wird. Zudem wird vorgeschlagen, die Sendeleistung des Schlüssels schrittweise zu erhöhen, bis eine Rückmeldung vom Fahrzeug empfangen wird oder die Leistung an das empfangene Signal anzupassen. Ein weiteres Dokument, CN 117 912 143 A, schlägt vor, die Sendeleistung basierend auf den Gang-Informationen des Fahrzeugs zu steuern, um den Schlüssel in einen Energiesparmodus zu versetzen, beispielsweise wenn das Fahrzeug nicht im Parkmodus ist.

Dokument DE 10 2014 216 838 A1 beschreibt ein Zugangssystem für ein Fahrzeug, bei dem ein Kommunikationsabschnitt elektromagnetische Wellen mit reduzierter Sendeleistung überträgt, wenn eine mobile Vorrichtung für eine vorbestimmte Zeit im Übertragungsbereich verbleibt, um den Übertragungsbereich einzuschränken. Dokument EP 3 163 538 A1 beschreibt ein elektronisches Schlüsselsystem, bei dem das Schlüsselgerät die Sendeleistung eines Antwortsignals in Abhängigkeit von der empfangenen Signalstärke dynamisch anpasst, um den Energieverbrauch zu reduzieren und die Kommunikationssicherheit zu erhöhen. Dokument DE 11 2014 003 366 T5 beschreibt ein schlüsselloses Zugangssystem mit Frequenzsprungverfahren und amplitudenmodulierter Sendeleistung, bei dem Signale über pseudozufällig wechselnde Kanäle gesendet und empfangen werden, um Manipulationsversuche durch Angreifer zu erkennen und den Fahrzeugzugang zu verhindern.

Es ist jedoch zu beachten, dass viele Länder spezifische gesetzliche Vorgaben zur zulässigen Höchstfunkleistung, insbesondere im UHF-Frequenzbereich und bei der Übertragung größerer Datenmengen, festgelegt haben. Gleichzeitig muss sichergestellt werden, dass die Übermittlung der Daten fehlerfrei erfolgt.

Der Erfindung liegt nun die Aufgabe zugrunde, zumindest einige der Nachteile des Standes der Technik zu überwinden oder zu reduzieren und ein Verfahren, sowie ein Fahrzeug, einen Fahrzeugschlüssel und ein System für eine effiziente sowie regelkonforme Kommunikation zwischen Fahrzeugschlüssel und Fahrzeug bereitzustellen.

Die erfindungsgemäße Aufgabe wird gelöst durch ein Verfahren, ein Fahrzeug, einen Fahrzeugschlüssel und ein System gemäß den Patentansprüchen. Bevorzugte Weiterbildungen sind Gegenstand der Unteransprüche. Die vorliegende Erfindung bezieht sich auf den in den Ansprüchen definierten Gegenstand.

Ein erster Aspekt der vorliegenden Offenbarung betrifft ein Verfahren eines Fahrzeugs. Ein Fahrzeug ist im Sinne dieser Offenbarung bevorzugt ein Fortbewegungsmittel, das dazu ausgebildet ist, Personen und/oder Lasten auf der Erde, in der Luft und/oder im Weltraum zu transportieren. Bevorzugt ist das Fahrzeug ein Personenkraftwagen mit Verbrennungs-, Elektro-oder Hybridmotor.

Das Fahrzeug weist eine Steuereinheit und ein Kommunikationssystem mit einem Kommunikationssteuergerät und einem Sendeempfänger auf. Der Sendeempfänger ist zur Ultra-High-Frequency, UHF, Kommunikation mit einem Fahrzeugschlüssel ausgebildet. Ein Fahrzeugschlüssel ist im Sinne dieser Offenbarung bevorzugt ein elektronischer Fahrzeugfunkschlüssel und ist bevorzugt als eigenständige Vorrichtung oder innerhalb eines Nutzer-Endgerätes, wie beispielsweise einem Smartphone realisiert. Der Sendeempfänger ist bevorzugt ferner zur direkten oder indirekten drahtlosen Kommunikation mit dem Fahrzeugschlüssel in anderen Frequenzbereichen außerhalb von UHF ausgebildet.

Das Verfahren weist als einen Schritt ein Übermitteln einer ersten Nachricht durch die Steuereinheit an das Kommunikationssteuergerät auf. Die erste Nachricht weist bevorzugt Daten auf, die auf eine einzustellende UHF Sendeleistung des Sendeempfängers hindeuten, besonders bevorzugt ein oder mehrere binäre Flags. Die erste Nachricht ist bevorzugt eine Controller Area Network, CAN, Nachricht, die über einen CAN-Bus, besonders bevorzugt einen privaten CAN-Bus zwischen Steuereinheit und Kommunikationssystem übermittelt wird.

Bevorzugt sendet die Steuereinheit die erste Nachricht basierend auf einem Befehl eines zentralen Steuergerätes des Fahrzeugs. Mit anderen Worten erzeugt die Steuereinheit die erste Nachricht, setzt beispielsweise ein oder mehrere binäre Flags, basierend auf dem Befehl des zentralen Steuergerätes und sendet die erste Nachricht dann an das Kommunikationssteuergerät, nachdem sie den Befehl erhalten hat. Das zentrale Steuergerät ist bevorzugt als eigenständig ausgebildetes Steuergerät des Fahrzeugs ausgebildet. Alternativ bevorzugt ist das zentrale Steuergerät als Teil der Steuereinheit ausgebildet. Der Befehl ist bevorzugt ein Befehl zur Datenübertragung an den Fahrzeugschlüssel.

Bevorzugt sendet das zentrale Steuergerät zyklisch Befehle an die Steuereinheit. Beispielweise sendet das zentrale Steuergerät in regelmäßigen Zeitabständen einen Befehl, aktuelle Fahrzeugdaten an den Fahrzeugschlüssel zu übermitteln, damit diese im Fall eines Werkstattbesuchs ausgelesen werden können. Das Senden der Befehle ist bevorzugt ferner von einer Eigenschaft des Fahrzeugs, wie beispielsweise einer aktuellen Geschwindigkeit des Fahrzeugs abhängig. Beispielsweise wird der Befehl, aktuelle Fahrzeugdaten an den Fahrzeugschlüssel zu übermitteln, bevorzugt erst ab einer vorbestimmten Geschwindigkeit und nachdem eine vorbestimmte Zeit nach dem Motorstart vergangen ist, gesendet.

In einem weiteren Schritt weist das Verfahren ein Einstellen einer UHF Sendeleistung des Sendeempfängers auf. Die UHF Sendeleistung wird basierend auf der ersten Nachricht durch das Kommunikationssteuergerät eingestellt. Bevorzugt liest das Kommunikationssteuergerät dazu die Daten, die auf eine einzustellende UHF Sendeleistung des Sendeempfängers hindeuten, aus der ersten Nachricht aus und stellt basierend auf diesen Daten die Sendeleistung des Sendeempfängers ein.

Das erfindungsgemäße Verfahren bietet so vorteilhaft eine softwarebasierte Lösung für ein anwendungsspezifisches Einstellen einer Sendeleistung für die UHF Kommunikation mit dem Fahrzeugschlüssel. So kann vorteilhaft auf eine Hardware-Lösung für das Einstellen der Sendeleistung verzichtet werden, was Energie und Bauraum spart und folglich effizienter und nachhaltiger ist.

In einer bevorzugten Ausgestaltung weist das Verfahren als einen weiteren Schritt ein Senden einer zweiten Nachricht durch die Steuereinheit an das Kommunikationssteuergerät auf. Die zweite Nachricht ist bevorzugt eine CAN-Nachricht, die über einen CAN-Bus, besonders bevorzugt einen privaten CAN-Bus zwischen Steuereinheit und Kommunikationssystem gesendet wird. Die zweite Nachricht weist bevorzugt Nutzdaten auf, wie beispielsweise Fahrzeugdaten, die für einen kontaktlosen Zugang zum Fahrzeug oder für eine Auswertung in einer Werkstatt benötigt werden.

Ferner weist das Verfahren bevorzugt als einen weiteren Schritt ein Ansteuern des Sendeempfängers durch das Kommunikationssteuergerät auf. Der Sendeempfänger wird dabei dazu angesteuert, ein auf der zweiten Nachricht basierendes Datenpaket mit der eingestellten UHF Sendeleistung an den Fahrzeugschlüssel zu senden. Mit anderen Worten wertet das Kommunikationssteuergerät die zweite Nachricht aus und erstellt aus den enthaltenen Nutzdaten ein Datenpaket, welches dann mittels des Sendeempfängers mit der eingestellten UHF Sendeleistung an den Fahrzeugschlüssel gesendet wird.

Bevorzugt werden mehrere Datenpakete aus den Nutzdaten erstellt und mittels des Sendeempfängers mit der eingestellten UHF Sendeleistung gesendet. Bevorzugt wird die Anzahl der Datenpakete von dem Kommunikationssteuergerät basierend auf der ersten Nachricht ermittelt. Das Ansteuern erfolgt bevorzugt über eine interne Datenverbindung des Kommunikationssystems, besonders bevorzugt über einen Serial Peripheral Interface, SPI, Bus zwischen Kommunikationssteuergerät und Sendeempfänger.

Bevorzugt wird vor dem Senden des Datenpakets eine Verbindung zum Fahrzeugschlüssel aufgebaut und/oder getestet, bevorzugt mittels zumindest einer Ping Nachricht. Ebenfalls bevorzugt erfolgt ferner eine Authentifizierung des Fahrzeugs und/oder des Fahrzeugschlüssels. Bevorzugt erfolgt der Verbindungsaufbau und/oder der Verbindungstest und/oder die Authentifizierung mittels Low Frequency, LF, Funk Kommunikation.

Bevorzugt erfolgt nach dem Senden des Datenpakets ein Zurücksetzen der Sendeleistung des Sendeempfängers durch das Kommunikationssteuergerät auf eine Standard UHF Sendeleistung. Mit anderen Worten ist der Sendeempfänger bevorzugt grundsätzlich auf die Standard UHF Sendeleistung eingestellt und es wird, nachdem das Datenpaket mir der eingestellten Sendeleistung gesendet wurde, von dem Kommunikationssteuergerät wieder die Standard UHF Sendeleistung eingestellt.

Mit dem Verfahren in dieser bevorzugten Ausführungsform kann vorteilhaft eine spezifische Sendeleistung je nach zu übermittelnden Nutzdaten eingestellt werden.

In bevorzugter Ausgestaltung des Verfahrens ist vorgesehen, dass die UHF Sendeleistung als eine von zumindest zwei vorbestimmten UHF Sendeleistungen eingestellt wird. Bevorzugt wird die UHF Sendeleistung von dem Kommunikationssteuergerät basierend auf zumindest zwei Parameterdatensätzen eingestellt, die sich auf je eine vorbestimmte UHF Sendeleistung beziehen. Die erste Nachricht enthält bevorzugt zumindest ein binäres Flag. Anhand des zumindest einen binären Flags wählt das Kommunikationssteuergerät bevorzugt einen Parameterdatensatz aus, bevorzugt aus einer Look-Up Table, LUT. Bevorzugt wird die UHF Sendeleistung als eine von einer Vielzahl vorbestimmter UHF Sendeleistungen eingestellt.

So kann vorteilhaft je nach Gesetzeslage in einem Land auf die entsprechenden Parametersätze für die Sendeleistung verwiesen werden. Die Sendeleistung kann also flexibel angepasst werden, sodass vorteilhaft ein Einhalten gesetzlicher Vorgaben durch das Fahrzeug auch international gesichert werden kann.

In weiterer bevorzugter Ausgestaltung des Verfahrens ist vorgesehen, dass die UHF Sendeleistung als eine erste vorbestimmte UHF Sendeleistung oder als eine zweite vorbestimmte UHF Sendeleistung eingestellt wird, wobei die erste UHF Sendeleistung kleiner ist als die zweite UHF Sendeleistung. Bevorzugt wird die UHF Sendeleistung von dem Kommunikationssteuergerät basierend auf zwei Parameterdatensätzen eingestellt, die sich auf je eine der zwei vorbestimmten UHF Sendeleistungen beziehen. Die erste Nachricht enthält bevorzugt genau ein binäres Flag. Anhand des binären Flags wählt das Kommunikationssteuergerät bevorzugt einen der zwei Parameterdatensätze aus, bevorzugt aus einer Look-Up Table, LUT.

In einer ferner bevorzugten Ausführungsform ist vorgesehen, dass, wenn die erste vorbestimmte UHF Sendeleistung eingestellt wird, die zweite Nachricht Daten mit Bezug zu einer Serviceleistung für das Fahrzeug aufweist. Die Daten mit Bezug zu einer Serviceleistung für das Fahrzeug sind bevorzugt Daten, die für eine Serviceleistung für das Fahrzeug benötigt werden und beispielsweise in einer Werkstatt ausgelesen werden können. Bevorzugt wird, wenn die zweite Nachricht Daten mit Bezug zu einer Serviceleistung aufweist, das daraus erstellte Datenpaket mit der ersten vorbestimmten Sendeleistung von dem Sendeempfänger an den Fahrzeugschlüssel gesendet.

Gleichzeitig oder alternativ bevorzugt ist vorgesehen, dass, wenn die zweite vorbestimmte UHF Sendeleistung eingestellt wird, die zweite Nachricht Daten mit Bezug zu einer Authentifizierung für das Fahrzeug aufweist. Die Daten mit Bezug zu einer Authentifizierung für das Fahrzeug sind bevorzugt Daten, die für eine Authentifizierung des Fahrzeugschlüssels für einen kontaktlosen Zugang zum Fahrzeug benötigt werden. Bevorzugt wird, wenn die zweite Nachricht Daten mit Bezug zu einer Authentifizierung aufweist, das daraus erstellte Datenpaket mit der zweiten vorbestimmten Sendeleistung von dem Sendeempfänger an den Fahrzeugschlüssel gesendet.

Zwei typische Anwendungsformen eines Fahrzeugschlüssels können insbesondere ein System zum kontaktlosen Fahrzeugzugang (beispielsweise VW KESSY) und ein System zum Auslesen aktueller Fahrzeugdaten für eine Serviceleistung (beispielsweise VW Service Key) sein. Für diese beiden Anwendungen gelten oft verschiedene zulässige UHF Sendeleistungen weil die Kommunikation mit unterschiedlicher Telegrammlänge erfolgt. Eine niedrigere Sendeleistung ist deshalb bei einer Service Key Anwendung in manchen Ländern mit UHF Beschränkungen nötig und auch ohne eine erhöhte Fehleranfälligkeit möglich, da sich der Fahrzeugschlüssel während der Anwendung im Fahrzeug befindet. Der kontaktlose Fahrzeugzugang erfordert dagegen eine höhere Sendeleistung, unter anderem weil sich der Fahrzeugschlüssel hierbei außerhalb des Fahrzeugs befindet. Mit den vorstehend beschriebenen Ausführungsformen können vorteilhaft für die beiden Anwendungen des Fahrzeugschlüssels unterschiedliche Sendeleistungen verwendet werden.

In einer ebenfalls bevorzugten Ausführungsform wird die zweite Nachricht mit einem voreingestellten zeitlichen Abstand nach der ersten Nachricht gesendet. Der voreingestellte zeitliche Abstand liegt bevorzugt zwischen 0 ms und 100 ms, besonders bevorzugt zwischen 5 ms und 20 ms. So ist vorteilhaft eine Einstellung der Sendeleistung vor der Nutzdatenübermittlung möglich, was wichtig ist, da für die Datenübermittlung meist nur ein begrenztes Zeitfenster zur Verfügung steht. Die bevorzugte Ausführungsform verhindert also vorteilhaft fehlerhafte Datenübermittlungen.

Das Verfahren weist bevorzugt ferner ein Empfangen einer dritten Nachricht von dem Fahrzeugschlüssel auf. Die dritte Nachricht wird dabei durch das Kommunikationssteuergerät mittels des Sendeempfängers empfangen. Die dritte Nachricht weist bevorzugt ein Acknowledge, ACK, auf. Besonders bevorzugt ist das ACK eine über das gesendete Datenpaket berechnete Checksumme.

In einem weiteren Schritt wird bevorzugt der Sendeempfänger durch das Kommunikationssteuergerät basierend auf der dritten Nachricht angesteuert, das Datenpaket erneut zu senden. Bevorzugt prüft das Kommunikationssteuergerät die mit der dritten Nachricht empfangene Checksumme und sendet das Datenpaket mittels des Sendeempfängers erneut, wenn es feststellt, dass die Checksumme inkorrekt ist. Für die Prüfung der Checksumme berechnet das Kommunikationssteuergerät bevorzugt vor Übermittlung des Datenpakets selber eine Checksumme und speichert sie temporär auf einem internen Speicher. Alternativ bevorzugt speichert das Kommunikationssteuergerät das Datenpaket für die Prüfung der Checksumme temporär auf dem internen Speicher.

So kann vorteilhaft kontrolliert werden, dass das Datenpaket von dem Fahrzeugschlüssel wirklich empfangen wurde und falls nicht, das Datenpaket erneut gesendet werden. Somit wird vorteilhaft die Zuverlässigkeit der Datenübertragung erhöht.

Ein zweiter Aspekt der Offenbarung betrifft ein Computerprogramm, aufweisend Befehle, die, wenn das Programm von einem Computer, wie beispielsweise einer Steuereinheit eines Fahrzeugs, ausgeführt wird, den Computer veranlassen, das Verfahren eines Fahrzeugs, wie oben beschrieben, auszuführen.

Ein weiterer Aspekt der vorliegenden Offenbarung betrifft ein Fahrzeug, also bevorzugt ein Fortbewegungsmittel, das dazu ausgebildet ist, Personen und/oder Lasten auf der Erde, in der Luft und/oder im Weltraum zu transportieren. Bevorzugt ist das Fahrzeug ein Personenkraftwagen mit Verbrennungs-, Elektro- oder Hybridmotor.

Das Fahrzeug weist eine Steuereinheit und ein Kommunikationssystem mit einem Kommunikationssteuergerät und einem Sendeempfänger auf. Der Sendeempfänger ist zur Ultra-High-Frequency, UHF, Kommunikation mit einem Fahrzeugschlüssel ausgebildet. Der Fahrzeugschlüssel ist bevorzugt ein elektronischer Fahrzeugfunkschlüssel und ist bevorzugt als eigenständige Vorrichtung oder innerhalb eines Nutzer-Endgerätes, wie beispielsweise einem Smartphone realisiert. Der Sendeempfänger ist bevorzugt ferner zur direkten oder indirekten drahtlosen Kommunikation mit dem Fahrzeugschlüssel in anderen Frequenzbereichen außerhalb von UHF ausgebildet.

Die Steuereinheit ist dazu ausgebildet, eine erste Nachricht an das Kommunikationssteuergerät zu übermitteln. Die erste Nachricht weist bevorzugt Daten auf, die auf eine einzustellende UHF Sendeleistung des Sendeempfängers hindeuten, besonders bevorzugt ein oder mehrere binäre Flags. Die erste Nachricht ist bevorzugt eine CAN-Nachricht, die über einen CAN-Bus des Fahrzeugs, besonders bevorzugt einen privaten CAN-Bus zwischen Steuereinheit und Kommunikationssystem übermittelt wird.

Bevorzugt weist das Fahrzeug ferner ein zentrales Steuergerät auf. Das zentrale Steuergerät ist bevorzugt als eigenständig ausgebildetes Steuergerät des Fahrzeugs ausgebildet. Alternativ bevorzugt ist das zentrale Steuergerät als Teil der Steuereinheit ausgebildet. Bevorzugt ist die Steuereinheit dazu ausgebildet, die erste Nachricht basierend auf einem Befehl des zentralen Steuergerätes zu übermitteln. Mit anderen Worten erzeugt die Steuereinheit die erste Nachricht, setzt beispielsweise ein oder mehrere binäre Flags, basierend auf dem Befehl des zentralen Steuergerätes und sendet die erste Nachricht dann an das Kommunikationssteuergerät, nachdem sie den Befehl erhalten hat. Der Befehl ist bevorzugt ein Befehl zur Datenübertragung an den Fahrzeugschlüssel.

Bevorzugt ist das zentrale Steuergerät dazu ausgebildet, zyklisch Befehle an die Steuereinheit zu senden. Beispielweise sendet das zentrale Steuergerät in regelmäßigen Zeitabständen einen Befehl, aktuelle Fahrzeugdaten an den Fahrzeugschlüssel zu übermitteln, damit diese im Fall eines Werkstattbesuchs ausgelesen werden können. Das Senden der Befehle ist bevorzugt ferner von einer Eigenschaft des Fahrzeugs, wie beispielsweise einer aktuellen Geschwindigkeit des Fahrzeugs abhängig. Beispielsweise ist das zentrale Steuergerät bevorzugt dazu ausgebildet, den Befehl, aktuelle Fahrzeugdaten an den Fahrzeugschlüssel zu übermitteln, erst ab einer vorbestimmten Geschwindigkeit und nachdem eine vorbestimmte Zeit nach dem Motorstart vergangen ist, zu senden.

Das Kommunikationssteuergerät ist dazu ausgebildet, eine UHF Sendeleistung des Sendeempfängers basierend auf der ersten Nachricht einzustellen. Bevorzugt ist das Kommunikationssteuergerät dazu ausgebildet, die Daten, die auf eine einzustellende UHF Sendeleistung des Sendeempfängers hindeuten, aus der ersten Nachricht auszulesen und basierend auf diesen Daten die Sendeleistung des Sendeempfängers einzustellen.

Das erfindungsgemäße Fahrzeug kann so vorteilhaft softwarebasiert eine Sendeleistung für die UHF Kommunikation mit dem Fahrzeugschlüssel anwendungsspezifisch einstellen. So kann vorteilhaft auf eine Hardware-Lösung für das Einstellen der Sendeleistung verzichtet werden, was Energie und Bauraum im Fahrzeug spart und dieses folglich effizienter und nachhaltiger macht.

In bevorzugten Ausführungsformen des Fahrzeugs ist die Steuereinheit in Kombination mit dem Kommunikationssystem ferner dazu ausgebildet, ein wie oben beschriebenes Verfahren auszuführen. Bevorzugte Ausführungsformen des beanspruchten Fahrzeugs entsprechen sinngemäß den oben beschriebenen bevorzugten Durchführungsformen des erfindungsgemäßen Verfahrens und erzielen dieselben Vorteile. Auf eine erneute detaillierte Beschreibung wird daher verzichtet.

Ein weiterer Aspekt der vorliegenden Offenbarung betrifft einen Fahrzeugschlüssel. Der Fahrzeugschlüssel ist bevorzugt ein elektronischer Fahrzeugfunkschlüssel und ist bevorzugt als eigenständige Vorrichtung oder innerhalb eines Nutzer-Endgerätes, wie beispielsweise einem Smartphone realisiert.

Der Fahrzeugschlüssel weist ein Steuergerät und einen Sendeempfänger auf. Der Sendeempfänger ist dazu ausgebildet, mit einem Fahrzeug per Ultra-High-Frequency, UHF, Funk zu kommunizieren. Der Sendeempfänger ist bevorzugt ferner zur direkten oder indirekten drahtlosen Kommunikation mit dem Fahrzeug in anderen Frequenzbereichen außerhalb von UHF ausgebildet.

Das Steuergerät des Fahrzeugschlüssels ist dazu ausgebildet, mittels des Sendeempfängers ein Datenpaket, das mit einer vorbestimmten UHF Sendeleistung von dem Fahrzeug gesendet wurde, zu empfangen. Die vorbestimmte UHF Sendeleistung ist bevorzugt eine von zumindest zwei vorbestimmten UHF Sendeleistungen, ebenfalls bevorzugt eine von einer Vielzahl vorbestimmter UHF Sendeleistungen.

Besonders bevorzugt ist die UHF Sendeleistung eine erste vorbestimmte UHF Sendeleistung oder eine zweite vorbestimmte UHF Sendeleistung, wobei die erste UHF Sendeleistung kleiner ist als die zweite UHF Sendeleistung.

Bevorzugt weist das Datenpaket, wenn es mit der ersten vorbestimmten UHF Sendeleistung empfangen wird, Daten mit Bezug zu einer Serviceleistung für das Fahrzeug auf. Die Daten mit Bezug zu einer Serviceleistung für das Fahrzeug sind bevorzugt Daten, die für eine Serviceleistung für das Fahrzeug benötigt werden und beispielsweise in einer Werkstatt ausgelesen werden können. Gleichzeitig oder alternativ bevorzugt ist vorgesehen, dass das Datenpaket, wenn es mit der zweiten vorbestimmten UHF Sendeleistung empfangen wird, Daten mit Bezug zu einer Authentifizierung für das Fahrzeug aufweist. Die Daten mit Bezug zu einer Authentifizierung für das Fahrzeug sind bevorzugt Daten, die für eine Authentifizierung des Fahrzeugschlüssels für einen kontaktlosen Zugang zum Fahrzeug benötigt werden.

Bevorzugt wird vor dem Empfangen des Datenpakets eine Verbindung zum Fahrzeug aufgebaut und/oder getestet, bevorzugt mittels zumindest einer Ping Nachricht. Ebenfalls bevorzugt erfolgt ferner eine Authentifizierung des Fahrzeugs und/oder des Fahrzeugschlüssels. Bevorzugt erfolgt der Verbindungsaufbau und/oder der Verbindungstest und/oder die Authentifizierung mittels Low Frequency, LF, Funk Kommunikation.

Der erfindungsgemäße Fahrzeugschlüssel kann mit unterschiedlichen Sendeleistungen Daten von einem Fahrzeug empfangen. Die Sendeleistung kann also vorteilhaft flexibel angepasst werden, sodass gesetzliche Vorgaben eingehalten werden bei gleichzeitiger Minimierung der Fehleranfälligkeit der Datenübertragung.

In einer bevorzugten Ausführungsform weist der Fahrzeugschlüssel ferner einen Datenspeicher auf. Das Steuergerät ist bevorzugt ferner dazu ausgebildet, das Datenpaket auf dem Datenspeicher zu speichern. Bevorzugt ist das Steuergerät dazu ausgebildet, das Datenpaket basierend auf der vorbestimmten UHF Sendeleistung, mit der es empfangen wurde, zu speichern. Bevorzugt ist das Steuergerät dazu ausgebildet, das Datenpaket zu speichern, wenn es mit der ersten vorbestimmten Sendeleistung empfangen wurde. Mit anderen Worten ist das Steuergerät bevorzugt dazu ausgebildet, das Datenpaket zu speichern, wenn es Daten mit Bezug zu einer Serviceleistung des Fahrzeugs aufweist.

Bevorzugt ist das Steuergerät des Fahrzeugschlüssels ferner dazu ausgebildet, das gespeicherte Datenpaket mittels des Sendeempfängers an eine externe Vorrichtung zu übermitteln. Die externe Vorrichtung ist bevorzugt ein Lesegerät, das beispielsweise in einer Werkstatt verwendet wird. So kann das empfangene Datenpaket vorteilhaft ausgelesen werden, insbesondere wenn es Daten enthält, die beispielsweise für eine Serviceleistung für das Fahrzeug benötigt werden.

Eine weitere bevorzugte Ausführungsform des Fahrzeugschlüssels sieht vor, dass das Steuergerät ferner dazu ausgebildet ist, mittels des Sendeempfängers eine auf dem Datenpaket basierende Nachricht an das Fahrzeug zu senden. Bevorzugt ist die Steuereinheit dazu ausgebildet, ein auf dem Datenpaket basierendes ACK an das Fahrzeug zu senden. Besonders bevorzugt ist das ACK eine über das empfangene Datenpaket berechnete Checksumme. Mit anderen Worten ist das Steuergerät bevorzugt dazu ausgebildet, eine Checksumme über das empfangene Datenpaket zu berechnen und diese Checksumme mit der Nachricht mittels des Sendeempfängers an das Fahrzeug zu senden.

So kann vorteilhaft von dem Fahrzeug kontrolliert werden, dass das Datenpaket von dem Fahrzeugschlüssel richtig und vollständig empfangen wurde und falls nicht, das Datenpaket erneut gesendet beziehungsweise von dem Fahrzeugschlüssel empfangen werden. Somit wird vorteilhaft die Zuverlässigkeit der Datenübertragung erhöht.

In einer ebenfalls bevorzugten Ausführungsform ist das Steuergerät ferner dazu ausgebildet, basierend auf dem empfangenen Datenpaket eine UHF Sendeleistung des Sendeempfängers einzustellen. Bevorzugt ist das Steuergerät dazu ausgebildet, die UHF Sendeleistung des Sendeempfängers an die UHF Sendeleistung anzupassen, mit der das Datenpaket empfangen wurde. Ebenfalls bevorzugt weist das empfangene Datenpaket Daten auf, die auf eine einzustellende UHF Sendeleistung des Sendeempfängers hindeuten, beispielsweise ein oder mehrere binäre Flags. Bevorzugt ist das Steuergerät dazu ausgebildet, basierend auf diesen Daten die Sendeleistung des Sendeempfängers einzustellen. Bevorzugt ist das Steuergerät ebenfalls dazu ausgebildet, die auf dem Datenpaket basierende Nachricht mittels des Sendeempfängers mit der eingestellten UHF Sendeleistung an das Fahrzeug zu senden.

In einer bevorzugten Ausführungsform ist das Steuergerät ferner dazu ausgebildet, eine UHF Sendeleistung für des empfangene Datenpaket zu ermitteln und das empfangene Datenpaket entsprechend der ermittelten UHF Sendeleistung zu verarbeiten.

Der Fahrzeugschlüssel kann also in diesen bevorzugten Ausführungsformen mit unterschiedlichen Sendeleistungen mit dem Fahrzeug kommunizieren. Die Sendeleistung kann also vorteilhaft flexibel angepasst werden, sodass gesetzliche Vorgaben eingehalten werden bei gleichzeitiger Minimierung der Fehleranfälligkeit der Datenübertragung.

Ein weiterer Aspekt der vorliegenden Offenbarung betrifft ein System, das ein wie oben stehend beschriebenes Fahrzeug und einen wie oben stehend beschriebenen Fahrzeugschlüssel aufweist. Bevorzugt weist das System mehrere wie oben stehend beschriebene Fahrzeugschlüssel auf, besonders bevorzugt einen ersten und einen zweiten Fahrzeugschlüssel, wobei jeder der beiden Schlüssel, wie oben stehend beschrieben, ausgebildet ist.

Bevorzugte Ausführungsformen des beanspruchten Systems entsprechen sinngemäß den oben beschriebenen bevorzugten Ausführungsformen des erfindungsgemäßen Fahrzeugs und des erfindungsgemäßen Fahrzeugschlüssels und erzielen dieselben Vorteile. Auf eine erneute detaillierte Beschreibung wird daher verzichtet.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Darstellung eines erfindungsgemäßen Verfahrens eines Fahrzeugs gemäß einer Ausführungsform;
- Figur 2: eine schematische Darstellung eines erfindungsgemäßen Fahrzeugs und eines erfindungsgemäßen Systems gemäß einer Ausführungsform;
- Figur 3: eine schematische Darstellung eines erfindungsgemäßen Fahrzeugschlüssels gemäß einer Ausführungsform; und
- Figur 4: ein Ablaufdiagramm eines erfindungsgemäßen Verfahrens gemäß einer Ausführungsform.

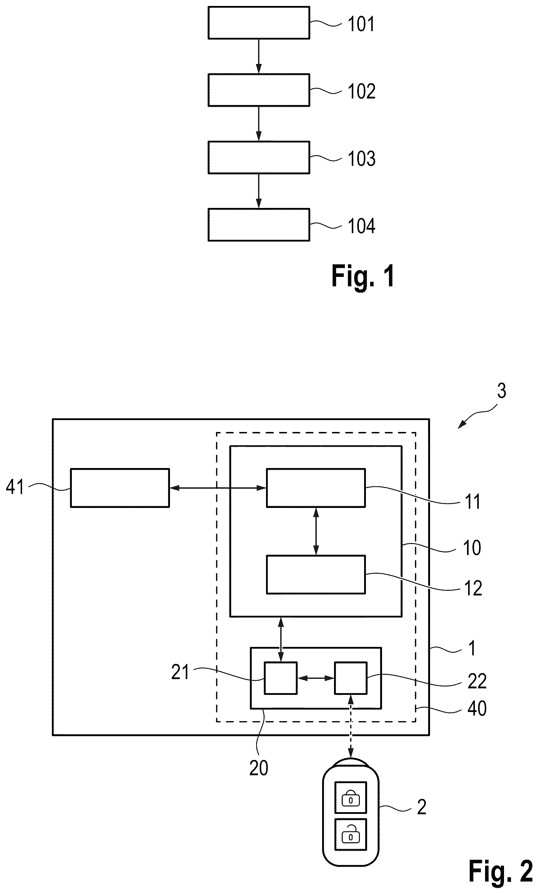

Figur 1 zeigt eine schematische Darstellung eines erfindungsgemäßen Verfahrens eines Fahrzeugs insbesondere eines Personenkraftwagens mit Verbrennungs-, Elektro- oder Hybridmotor gemäß einer Ausführungsform. Das Fahrzeug weist eine Steuereinheit; und ein Kommunikationssystem mit einem Kommunikationssteuergerät und einem Sendeempfänger auf. Der Sendeempfänger ist zur Ultra-High-Frequency, UHF, Kommunikation mit einem Fahrzeugschlüssel ausgebildet.

Das Verfahren weist als einen Schritt 101 ein Übermitteln einer ersten Nachricht durch die Steuereinheit an das Kommunikationssteuergerät auf. Die erste Nachricht weist Daten auf, die auf eine einzustellende UHF Sendeleistung des Sendeempfängers hindeuten, insbesondere ein oder mehrere binäre Flags.

In einem weiteren Schritt 102 weist das Verfahren ein Einstellen einer UHF Sendeleistung des Sendeempfängers auf. Die UHF Sendeleistung wird basierend auf der im ersten Schritt 101 empfangenen ersten Nachricht durch das Kommunikationssteuergerät eingestellt. Insbesondere liest das Kommunikationssteuergerät dazu die Daten, die auf eine einzustellende UHF Sendeleistung des Sendeempfängers hindeuten, aus der ersten Nachricht aus und stellt basierend auf diesen Daten die Sendeleistung des Sendeempfängers ein.

Das Verfahren weist als einen weiteren Schritt 103 ein Senden einer zweiten Nachricht durch die Steuereinheit an das Kommunikationssteuergerät auf. Die zweite Nachricht weist insbesondere Nutzdaten auf, wie beispielsweise Fahrzeugdaten, die für einen kontaktlosen Zugang zum Fahrzeug oder für eine Auswertung in einer Werkstatt benötigt werden.

In einem weiteren Schritt 104 wird der Sendeempfänger durch das Kommunikationssteuergerät angesteuert. Der Sendeempfänger wird dabei dazu angesteuert, ein auf der zweiten Nachricht basierendes Datenpaket mit der eingestellten UHF Sendeleistung an den Fahrzeugschlüssel zu senden. Mit anderen Worten wertet das Kommunikationssteuergerät die zweite Nachricht aus und erstellt aus den enthaltenen Nutzdaten ein Datenpaket, welches dann mittels des Sendeempfängers mit der eingestellten UHF Sendeleistung an den Fahrzeugschlüssel gesendet wird.

Figur 2 zeigt eine schematische Darstellung eines erfindungsgemäßen Fahrzeugs 1, insbesondere eines Personenkraftwagens mit Verbrennungs-, Elektro- oder Hybridmotor und eines erfindungsgemäßen Systems 3 gemäß einer Ausführungsform.

Das Fahrzeug 1 weist eine Steuereinheit 10 mit einer CPU 11 und einem internen Speicher 12 auf, die miteinander kommunizieren, beispielsweise über einen geeigneten Daten-Bus. Ferner weist das Fahrzeug 1 ein Kommunikationssystem 20 mit einem Kommunikationssteuergerät 21 und einem Sendeempfänger 22 auf. Das Kommunikationssteuergerät 21 und der Sendeempfänger 22 kommunizieren ebenfalls über einen geeigneten Daten-Bus miteinander, insbesondere über einen SPI-Bus. Die Steuereinheit 10 und das Kommunikationssystem 20 kommunizieren insbesondere über einen privaten CAN-Bus des Body Control Module, BCM, 40 des Fahrzeugs 1 miteinander.

Der Sendeempfänger 22 ist zur Ultra-High-Frequency, UHF, Kommunikation mit einem Fahrzeugschlüssel 2 ausgebildet. Der Fahrzeugschlüssel 2 ist ein elektronischer Fahrzeugfunkschlüssel und ist beispielsweise als eigenständige Vorrichtung oder innerhalb eines Nutzer-Endgerätes, wie beispielsweise einem Smartphone realisiert. Der Sendeempfänger 22 ist ferner zur direkten oder indirekten drahtlosen Kommunikation mit dem Fahrzeugschlüssel 2 in anderen Frequenzbereichen außerhalb von UHF ausgebildet.

Die Steuereinheit 10 ist dazu ausgebildet, Daten an das Kommunikationssteuergerät 21 zu übermitteln, die auf eine einzustellende UHF Sendeleistung des Sendeempfängers 22 hindeuten. Das Kommunikationssteuergerät 21 ist dazu ausgebildet, die UHF Sendeleistung des Sendeempfängers 22 basierend auf diesen Daten einzustellen.

Das Fahrzeug 1 weist ferner ein zentrales Steuergerät 41 auf. Das zentrale Steuergerät 41 ist als eigenständig ausgebildetes Steuergerät des Fahrzeugs 1 ausgebildet, es kann aber auch als Teil der Steuereinheit 10 ausgebildet sein. Das zentrale Steuergerät 41 und die Steuereinheit 10 kommunizieren miteinander, beispielsweise über einen geeigneten Datenbus.

Das zentrale Steuergerät 41 ist dazu ausgebildet, einen Befehl zur Datenübertragung an den Fahrzeugschlüssel 2 and die Steuereinheit 10 zu senden. Die Steuereinheit 10 ist dazu ausgebildet, basierend auf dem Befehl des zentralen Steuergerätes 41 eine erste Nachricht mit den Daten bezüglich der einzustellenden Sendeleistung an das Kommunikationssystem 20 zu übermitteln.

Insbesondere ist das zentrale Steuergerät 41 dazu ausgebildet, zyklisch Befehle an die Steuereinheit 10 zu senden. Beispielweise sendet das zentrale Steuergerät 41 in regelmäßigen Zeitabständen einen Befehl, aktuelle Fahrzeugdaten an den Fahrzeugschlüssel 2 zu übermitteln, damit diese im Fall eines Werkstattbesuchs ausgelesen werden können.

Die Steuereinheit 10 ist ferner zum Senden von Nutzdaten an das Kommunikationssystem 20 ausgebildet, wie beispielsweise Fahrzeugdaten, die für einen kontaktlosen Zugang zum Fahrzeug oder für eine Auswertung in einer Werkstatt benötigt werden.

Das Kommunikationssteuergerät 21 ist ferner dazu ausgebildet, den Sendeempfänger anzusteuern, ein auf den vom der Steuereinheit 10 empfangenen Nutzdaten basierendes Datenpaket mit der eingestellten UHF Sendeleistung an den Fahrzeugschlüssel 2 zu senden.

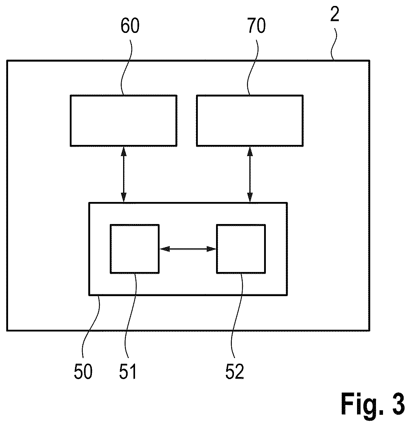

Figur 3 zeigt eine schematische Darstellung eines erfindungsgemäßen Fahrzeugschlüssels 2 gemäß einer Ausführungsform. Der Fahrzeugschlüssel 2 ist insbesondere ein elektronischer Fahrzeugfunkschlüssel und ist als eigenständige Vorrichtung oder innerhalb eines Nutzer-Endgerätes, wie beispielsweise einem Smartphone, realisiert.

Der Fahrzeugschlüssel 2 weist ein Steuergerät 50 mit einer CPU 51 und einem internen Speicher 52 und einen Sendeempfänger 60 auf. Der Sendeempfänger 60 ist dazu ausgebildet, mit einem Fahrzeug per Ultra-High-Frequency, UHF, Funk zu kommunizieren. Der Sendeempfänger 60 ist insbesondere ebenfalls zur direkten oder indirekten drahtlosen Kommunikation mit dem Fahrzeug in anderen Frequenzbereichen außerhalb von UHF ausgebildet.

Das Steuergerät 50 des Fahrzeugschlüssels 2 ist dazu ausgebildet, mittels des Sendeempfängers 60 ein Datenpaket, das mit einer vorbestimmten UHF Sendeleistung von dem Fahrzeug gesendet wurde, zu empfangen.

Der Fahrzeugschlüssel 2 weist ferner einen Datenspeicher 70 auf. Das Steuergerät 50 ist dazu ausgebildet, das empfangene Datenpaket auf dem Datenspeicher 70 zu speichern. Insbesondere ist das Steuergerät 50 des Fahrzeugschlüssels 2 ferner dazu ausgebildet, das gespeicherte Datenpaket mittels des Sendeempfängers 60 an eine externe Vorrichtung zu übermitteln. Die externe Vorrichtung ist beispielsweise ein Lesegerät, das in einer Werkstatt verwendet wird. So kann das empfangene Datenpaket vorteilhaft ausgelesen werden, insbesondere wenn es Daten enthält, die beispielsweise für eine Serviceleistung für das Fahrzeug benötigt werden.

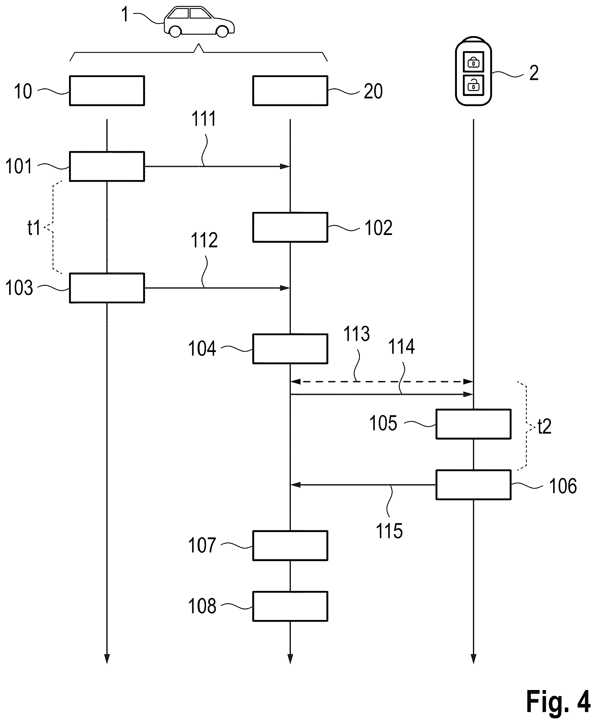

Figur 4 zeigt ein Ablaufdiagramm eines erfindungsgemäßen Verfahrens eines Fahrzeugs 1 gemäß einer Ausführungsform. Das Fahrzeug 1 weist eine Steuereinheit 10; und ein Kommunikationssystem 20 mit einem Kommunikationssteuergerät und einem Sendeempfänger auf.

In einem ersten Schritt 101 erfolgt ein Übermitteln einer ersten Nachricht 111 durch die Steuereinheit 10 an das Kommunikationssystem 20. Die erste Nachricht 111 ist insbesondere eine CAN-Nachricht und weist Daten auf, die auf eine einzustellende UHF Sendeleistung des Sendeempfängers hindeuten, insbesondere ein oder mehrere binäre Flags.

In einem weiteren Schritt 102 wird eine UHF Sendeleistung basierend auf der im ersten Schritt 101 empfangenen ersten Nachricht 111 durch das Kommunikationssystem 20 eingestellt. Insbesondere liest das Kommunikationssteuergerät dazu die Daten, die auf eine einzustellende UHF Sendeleistung des Sendeempfängers hindeuten, aus der ersten Nachricht 111 aus und stellt basierend auf diesen Daten die Sendeleistung des Sendeempfängers ein.

Das Verfahren weist als einen weiteren Schritt 103 ein Senden einer zweiten Nachricht 112 durch die Steuereinheit 10 an das Kommunikationssystem 20 auf. Die zweite Nachricht 112 weist insbesondere Nutzdaten auf, wie beispielsweise Fahrzeugdaten, die für einen kontaktlosen Zugang zum Fahrzeug oder für eine Auswertung in einer Werkstatt benötigt werden. Die zweite Nachricht 112 wird insbesondere mit einem voreingestellten zeitlichen Abstand t1 nach der ersten Nachricht 111 gesendet. Der voreingestellte zeitliche Abstand liegt beispielsweise zwischen 5 ms und 20 ms. So ist vorteilhaft eine Einstellung der Sendeleistung vor der Nutzdatenübermittlung möglich, was wichtig ist, da für die Datenübermittlung insbesondere nur ein begrenztes Zeitfenster t2 zur Verfügung steht.

In einem weiteren Schritt 104 wird der Sendeempfänger des Kommunikationssystems 20 dazu angesteuert, ein auf der zweiten Nachricht basierendes Datenpaket 114 mit der eingestellten UHF Sendeleistung an den Fahrzeugschlüssel 2 zu senden. Mit anderen Worten wertet das Kommunikationssystem 20 die zweite Nachricht 112 aus und erstellt aus den enthaltenen Nutzdaten ein Datenpaket 114, welches dann mittels des Sendeempfängers mit der eingestellten UHF Sendeleistung an den Fahrzeugschlüssel 2 gesendet wird.

Vor dem Senden des Datenpakets 114 wird eine Verbindung zum Fahrzeugschlüssel aufgebaut oder getestet, insbesondere mittels zumindest einer Ping Nachricht 113 mittels Low Frequency, LF, Funk Kommunikation. Wurde der Fahrzeugschlüssel 2 per LF angepingt, kann dann ein bidirektionaler Datenaustausch per UHF zwischen Fahrzeugschlüssel 2 und dem Kommunikationssystem 20 des Fahrzeugs 1 erfolgen, also das Datenpaket 114 übermittelt werden. Dazu steht jedoch nur ein begrenztes Zeitfenster t2 zur Verfügung in dem der Fahrzeugschlüssel 2 basierend auf der Ping-Nachricht 113 in einem Empfangsmodus ist.

Da die Sendeleistung des Kommunikationssystems 20 bereits in Schritt 102 eingestellt wurde ist es nun möglich, das Datenpaket 114 ohne Verzögerung zu senden. So kann der Fahrzeugschlüssel 2 in einem weiteren Schritt 105 das Datenpaket 114, das mit der vorbestimmten UHF Sendeleistung von dem Fahrzeug 1 gesendet wurde innerhalb des Zeitfensters t2 empfangen.

In einem weiteren Schritt 106 sendet der Fahrzeugschlüssel 2 eine auf dem Datenpaket 114 basierende dritte Nachricht 115 an das Fahrzeug 1. Insbesondere berechnet das Steuergerät des Fahrzeugschlüssels 2 dafür eine Checksumme über das empfangene Datenpaket und sendet diese Checksumme mit der dritten Nachricht 115 an das Fahrzeug 1.

Im Schritt 107 empfängt das Fahrzeug 1 mittels des Kommunikationssystems 20 die dritte Nachricht von dem Fahrzeugschlüssel 2.

In einem weiteren Schritt 108 prüft das Kommunikationssystem die mit der dritten Nachricht 115 empfangene Checksumme. Für die Prüfung der Checksumme berechnet das Kommunikationssystem 20 insbesondere vor Übermittlung des Datenpakets 114 selber eine Checksumme und speichert sie temporär auf einem internen Speicher oder speichert das Datenpaket 114 temporär auf dem internen Speicher.

Falls das Kommunikationssystem feststellt, dass die Checksumme inkorrekt ist, startet es den Schritt 104 erneut, sendet also das Datenpaket 114 mittels des Sendeempfängers erneut. So kann vorteilhaft kontrolliert werden, dass das Datenpaket 114 von dem Fahrzeugschlüssel 2 vollständig empfangen wurde und falls nicht, das Datenpaket 114 erneut gesendet werden. Somit wird vorteilhaft die Zuverlässigkeit der Datenübertragung zwischen Fahrzeug 1 und Fahrzeugschlüssel 2 erhöht.

### Bezugszeichenliste

- 1: Fahrzeug
- 2: Fahrzeugschlüssel
- 3: System
- 10: Steuereinheit
- 11: CPU
- 12: interner Speicher
- 20: Kommunikationssystem
- 21: Kommunikationssteuergerät
- 22: Sendeempfänger
- 40: BCM
- 41: zentrales Steuergerät
- 50: Steuergerät
- 51: CPU
- 52: interner Speicher
- 60: Sendeempfänger
- 70: Datenspeicher
- 101: erster Verfahrensschritt
- 102: zweiter Verfahrensschritt
- 103: dritter Verfahrensschritt
- 104: vierter Verfahrensschritt
- 105: fünfter Verfahrensschritt
- 106: sechster Verfahrensschritt
- 107: siebter Verfahrensschritt
- 108: achter Verfahrensschritt
- 111: erste Nachricht
- 112: zweite Nachricht
- 113: Ping Nachricht
- 114: Datenpaket
- 115: dritte Nachricht
- t1: erster vorbestimmter Zeitraum
- t2: zweiter vorbestimmter Zeitraum

## Patentansprüche

1. Verfahren eines Fahrzeugs (1) mit einer Steuereinheit (10); und einem Kommunikationssystem (20) mit einem Kommunikationssteuergerät (21) und einem Sendeempfänger (22), der zur Ultra-High-Frequency, UHF, Kommunikation mit einem Fahrzeugschlüssel (2) ausgebildet ist, das Verfahren aufweisend die Schritte:
Übermitteln (101) einer ersten Nachricht (111) durch die Steuereinheit (10) an das Kommunikationssteuergerät (20),
Einstellen (102) einer UHF Sendeleistung des Sendeempfängers (22) basierend auf der ersten Nachricht (111) durch das Kommunikationssteuergerät (21),
Senden (103) einer zweiten Nachricht (112) durch die Steuereinheit (10) an das Kommunikationssteuergerät (21), und
Ansteuern (104) des Sendeempfängers (22) durch das Kommunikationssteuergerät (21), um ein auf der zweiten Nachricht (112) basierendes Datenpaket (114) mit der eingestellten UHF Sendeleistung an den Fahrzeugschlüssel (2) zu senden,
wobei, wenn die zweite Nachricht (112) Daten mit Bezug zu einer Serviceleistung für das Fahrzeug (1) aufweist, das Kommunikationssteuergerät die UHF Sendeleistung als eine erste vorbestimmte UHF Sendeleistung einstellt.

2. Verfahren nach Anspruch 1, wobei die UHF Sendeleistung als eine von zumindest zwei vorbestimmten UHF Sendeleistungen eingestellt wird.

3. Verfahren nach einem der vorangehenden Ansprüche, wobei die UHF Sendeleistung als die erste vorbestimmte UHF Sendeleistung oder als eine zweite vorbestimmte UHF Sendeleistung eingestellt wird, wobei die erste UHF Sendeleistung kleiner ist als die zweite UHF Sendeleistung.

4. Verfahren nach Anspruch 3, wobei, wenn die zweite vorbestimmte UHF Sendeleistung eingestellt wird, die zweite Nachricht (112) Daten mit Bezug zu einer Authentifizierung für das Fahrzeug (1) aufweist.

5. Verfahren nach einem der vorangehenden Ansprüche, wobei die zweite Nachricht (112) mit einem voreingestellten zeitlichen Abstand (t1) nach der ersten Nachricht (111) gesendet wird.

6. Verfahren nach einem der vorangehenden Ansprüche, ferner aufweisend die Schritte:
Empfangen (107) einer dritten Nachricht (115) von dem Fahrzeugschlüssel (2) durch das Kommunikationssteuergerät (21), mittels des Sendeempfängers (22), und
Ansteuern (108) des Sendeempfängers (22) durch das Kommunikationssteuergerät (21) basierend auf der dritten Nachricht (115), das Datenpaket (114) erneut zu senden.

7. Fahrzeug (1), aufweisend
eine Steuereinheit (10); und
ein Kommunikationssystem (20) mit einem Kommunikationssteuergerät (21) und einem Sendeempfänger (22), der zur Ultra-High-Frequency, UHF, Kommunikation mit einem Fahrzeugschlüssel (2) ausgebildet ist,
wobei die Steuereinheit (10) dazu ausgebildet ist, eine erste Nachricht (111) an das Kommunikationssteuergerät (21) zu übermitteln und eine zweite Nachricht (112) an das Kommunikationssteuergerät (21) zu senden,
wobei das Kommunikationssteuergerät (21) dazu ausgebildet ist, basierend auf der ersten Nachricht (111), eine UHF Sendeleistung des Sendeempfängers (22) einzustellen und den Sendeempfänger anzusteuern, ein auf der zweiten Nachricht (112) basierendes Datenpaket (114) mit der eingestellten UHF Sendeleistung an den Fahrzeugschlüssel (2) zu senden, und
wobei, wenn die zweite Nachricht (112) Daten mit Bezug zu einer Serviceleistung für das Fahrzeug (1) aufweist, das Kommunikationssteuergerät die UHF Sendeleistung als eine erste vorbestimmte UHF Sendeleistung einstellt.

8. Fahrzeug (1) nach Anspruch 7, wobei die Steuereinheit (10) in Kombination mit dem Kommunikationssystem (20) ferner dazu ausgebildet sind, das Verfahren nach einem der Ansprüche 2 bis 6 auszuführen.

9. Fahrzeugschlüssel (2), aufweisend
ein Steuergerät (50); und
einen Sendeempfänger (60), der dazu ausgebildet ist, mit einem Fahrzeug (1) per Ultra-High-Frequency, UHF, Funk zu kommunizieren,
wobei das Steuergerät (50) dazu ausgebildet ist, mittels des Sendeempfängers (60) ein Datenpaket (114), das mit einer vorbestimmten UHF Sendeleistung von dem Fahrzeug (1) gesendet wurde, zu empfangen,
wobei das Datenpaket (114) Daten mit Bezug zu einer Serviceleistung für das Fahrzeug aufweist, wenn es mit einer ersten vorbestimmten UHF Sendeleistung empfangen wird.

10. Fahrzeugschlüssel (2) nach Anspruch 9, ferner aufweisend
einen Datenspeicher (70),
wobei das Steuergerät (50) ferner dazu ausgebildet ist, das Datenpaket (114) auf dem Datenspeicher (70) zu speichern.

11. Fahrzeugschlüssel (2) nach einem der Ansprüche 9 oder 10, wobei das Steuergerät (50) ferner dazu ausgebildet ist, mittels des Sendeempfängers (60) eine auf dem Datenpaket (114) basierende Nachricht (115) an das Fahrzeug (1) zu senden.

12. Fahrzeugschlüssel (2) nach einem der Ansprüche 9 bis 11, wobei das Steuergerät (50) ferner dazu ausgebildet ist, basierend auf dem empfangenen Datenpaket (114) eine UHF Sendeleistung des Sendeempfängers (60) einzustellen.

13. Fahrzeugschlüssel (2) nach einem der Ansprüche 9 bis 12, wobei das Steuergerät (50) ferner dazu ausgebildet ist, eine UHF Sendeleistung für des empfangene Datenpaket (114) zu ermitteln und das empfangene Datenpaket (114) entsprechend der ermittelten UHF Sendeleistung zu verarbeiten.

14. System (3), aufweisend ein Fahrzeug (1) nach einem der Ansprüche 7 oder 8 und einen Fahrzeugschlüssel (2) nach einem der Ansprüche 9 bis 13.
